Europäisches Patentamt

European Patent Office

Office européen des brevets

(19)

(11) Numéro de publication : **0 024 985**
**B1**

# (12) FASCICULE DE BREVET EUROPÉEN

(45) Date de publication du fascicule du brevet :
**21.03.84**

(51) Int. Cl.³ : **G 21 C 17/04**

(21) Numéro de dépôt : **80401208.6**

(22) Date de dépôt : **22.08.80**

(54) **Dispositif étalon d'émission de produits de fission pour étalonner un système de détection de rupture de gaine dans un réacteur nucléaire.**

(30) Priorité : **28.08.79 FR 7921543**

(43) Date de publication de la demande :
**11.03.81 Bulletin 81/10**

(45) Mention de la délivrance du brevet :
**21.03.84 Bulletin 84/12**

(84) Etats contractants désignés :
**BE DE GB IT NL SE**

(56) Documents cités :
**US-A- 2 823 179**
**US-A- 4 032 395**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Graftieaux, Jean**
**11, Avenue Jean Jaurès**
**F-92290 Chatenay Malabry (FR)**
Inventeur : **Donguy, René**
**14, rue Paul Doumer**
**F-91370 Verrières le Buisson (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

# Dispositif étalon d'émission de produits de fission pour étalonner un système de détection de rupture de gaine dans un réacteur nucléaire

La présente invention a pour objet un dispositif étalon d'émission de produits de fission pour étalonner un système de détection de rupture de gaine d'éléments combustibles d'un réacteur nucléaire du type à eau sous pression.

De façon plus précise, la présente invention concerne un dispositif introduit dans la cuve d'un réacteur nucléaire du type à eau sous pression qui permet l'émission contrôlée de produits de fission, cette émission de produits de fission servant à l'étalonnage des dispositifs de détection de rupture de gaines des éléments combustibles du réacteur nucléaire, ces dispositifs de détection étant montés dans le circuit primaire du réacteur nucléaire.

Afin d'illustrer l'état de la technique, on se référera au document US-A-4 032 395 qui concerne une sonde de prélèvement de gaz caloporteur pour la détection de ruptures de gaine des éléments combustibles dans un réacteur nucléaire à haute température. La sonde comporte un corps en forme de T dont l'extrémité est percée d'un orifice en face duquel est disposé un tube interne de prélèvement du gaz caloporteur. Un gaz sous pression non contaminé est admis par le corps de sonde pour contrôler le débit du gaz caloporteur pénétrant par l'orifice de la sonde.

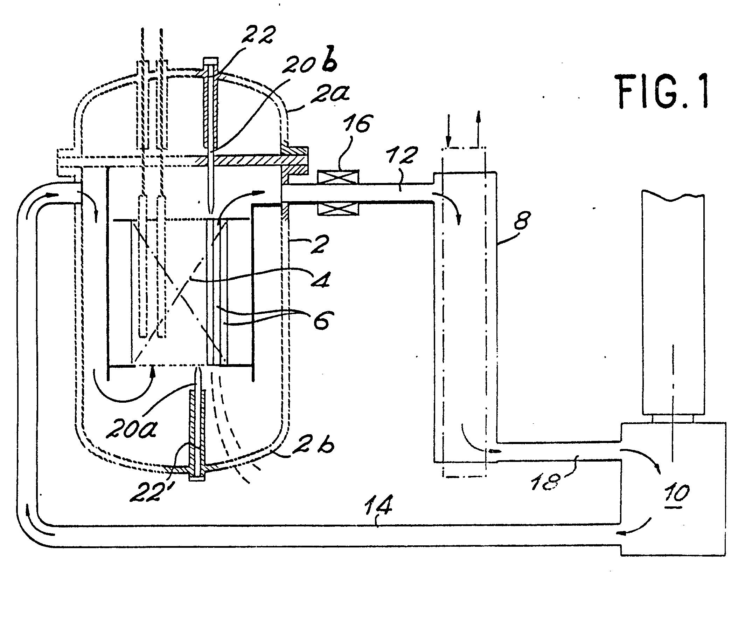

Pour mieux comprendre le problème à résoudre, on se référera de façon avantageuse à la figure 1 annexée sur laquelle on a présenté de façon simplifiée un réacteur nucléaire du type à eau pressurisée avec une boucle primaire de refroidissement. Sur cette figure, on trouve la cuve du réacteur 2 contenant le cœur 4 de celui-ci qui est constitué comme on le sait par des assemblages combustibles 6. La boucle primaire du réacteur comporte également un échangeur de chaleur ou générateur de vapeur 8 et une pompe de circulation 10 qui sont raccordés par les conduites primaires 12 et 14 à la cuve du réacteur. Il s'agit bien entendu d'une figure simplifiée et en fait on sait que le réacteur comporte plusieurs boucles de refroidissement. De préférence, le dispositif de détection de rupture de gaine 16 est disposé sur la conduite 12 qui relie la sortie de la cuve du réacteur 2 à l'entrée du générateur de vapeur 8. Ce dispositif de détection de rupture de gaine permet une telle détection en mesurant le taux de produits de fission dans le liquide de refroidissement. Par ailleurs, on comprend aisément que la détection des ruptures des gaines qui entourent les éléments combustibles constituant le cœur est un problème de sûreté très important, puisque ces gaines entourant le matériel combustible constituent la première barrière de protection vis-à-vis des produits de fission.

On comprend de plus que pour s'assurer du bon fonctionnement des détecteurs, il est nécessaire de tester ceux-ci, c'est-à-dire qu'il est nécessaire de pouvoir détecter à l'aide du dispositif 16 la présence d'une quantité étalon de produits de fission contenus dans l'eau de refroidissement. C'est l'objet de la présente invention.

Dans les techniques antérieures, un tel étalonnage était obtenu en plaçant à l'intérieur de la cuve 2 du réacteur dans le courant du fluide caloporteur à un endroit choisi, un corps radioactif tel que l'uranium métallique ou un dépôt d'oxyde d'uranium.

Cependant, cette technique ne donnait pas de bons résultats pour les raisons suivantes :

On avait une émission permanente de produits de fission dans le circuit de refroidissement primaire, ce qui a pour inconvénient d'augmenter la pollution et de créer un bruit de fond altérant les mesures réelles faites par le dispositif de détection de rupture de gaine en dehors des périodes d'étalonnage.

Aucun contrôle n'était possible quant à l'évolution du niveau d'activité de la source étalon et en conséquence, après un certain temps de fonctionnement, l'étalonnage du dispositif de détection de rupture de gaine risquait de devenir illusoire.

En cas de détérioration de la source, des fragments radioactifs pouvaient être introduits dans le circuit primaire de refroidissement.

La présente invention a précisément pour objet un dispositif d'émission de produits de fission étalon pour la détection de rupture de gaine dans un réacteur nucléaire à eau sous pression qui pallie les inconvénients cités ci-dessus. En particulier, le dispositif selon l'invention permet d'éviter un passage continu dans le liquide caloporteur de produits de fission ; il permet de définir de façon très précise les périodes d'émission de ces produits de fission, périodes correspondant aux instants d'étalonnage ; et enfin, il permet d'éviter le passage dans le liquide caloporteur de fragments du matériau radioactif utilisé comme étalon de produits de fission.

Pour obtenir ces résultats, le dispositif étalon d'émission de produits de fission pour étalonner un système de détection de rupture de gaine d'éléments combustibles dans un réacteur nucléaire du type refroidi par de l'eau sous pression, ledit réacteur comprenant une cuve de résistance à la pression et un cœur constitué par les assemblages d'éléments combustibles, se caractérise en ce qu'il comprend une canne creuse apte à être introduite dans ladite cuve et définissant une chambre divisée en une première chambre et une deuxième chambre située à l'extrémité de la canne par une restriction créant une première perte de charge, ladite deuxième chambre comportant sur sa paroi un dépôt ou un placage métallique de matériau radioactif et communiquant ou pouvant être mise en communication avec la cuve du réacteur lorsque ledit dispositif est en position, par une buse créant une deuxième perte de charge supérieure à celle qui est créée par ladite restriction, et au moins une première tubulure disposée dans ladite canne et débouchant à l'extrémité de la première chambre éloignée de la deuxième chambre, ladite première tubulure étant apte à être reliée à une source d'eau sous pression à une pression supérieure à celle de l'eau de refroidissement dudit réacteur, et apte à recueillir les produits de fission émis par ledit dépôt lorsqu'aucune pression n'est appliquée à l'entrée de ladite tubulure.

Selon un mode perfectionné de réalisation, le dispositif comprend une deuxième tubulure disposée dans ladite canne et débouchant à l'extrémité de ladite première chambre proche de la deuxième chambre, ladite deuxième tubulure étant apte à recueillir l'eau injectée sous un faible débit dans ladite première tubulure sous l'effet de la perte de charge créée par ladite restriction.

Grâce à ce mode de réalisation perfectionné, on peut avant de provoquer l'émission contrôlée de produits de fission assurer un balayage de la première chambre. Cela permet donc d'obtenir une émission de produits de fission en créneaux avec un front de montée bien déterminé. Or, il s'avère que les accidents correspondant à une rupture de gaine d'éléments combustibles se présentent sous un tel aspect.

De préférence, la chambre a une longueur suffisante et des parois réalisées avec un matériau suffisamment bon conducteur de la chaleur pour que l'eau injectée dans ladite chambre et sortant par ladite buse ait une température sensiblement égale à celle de l'eau dans la cuve du réacteur.

On comprend que grâce à cette dernière disposition, on évite le choc thermique qui résulterait de l'injection directe d'une eau à relativement basse température dans l'eau de la cuve qui a une température de l'ordre de 320 °C.

De toute façon l'invention sera mieux comprise à la lecture de la description qui suit de plusieurs modes de réalisation de l'invention donnés à titre d'exemples non limitatifs. La description se réfère aux figures annexées sur lesquelles on a représenté :

— sur la figure 1, une vue simplifiée d'un réacteur nucléaire du type PWR montrant l'implantation des dispositifs étalons d'émission de produits de fission selon l'invention,

— sur la figure 2, une vue montrant en coupe verticale l'ensemble du dispositif selon un premier mode de réalisation,

— sur la figure 3, une vue partielle de la figure 2 montrant une variante de réalisation de la buse de sortie de la chambre du dispositif,

— sur la figure 4, une vue partielle en coupe verticale montrant une variante de réalisation de la restriction séparant la première chambre de la deuxième chambre.

Si l'on revient à la figure 1, on a représenté sur celle-ci deux dispositifs d'émission de produits de fission selon l'invention mis en place dans la cuve du réacteur. Ces dispositifs sont référencés respectivement 20a et 20b. Leur mise en place à l'intérieur de la cuve se fait à travers des orifices 22 et 22' dits « orifices d'instrumentation » qui sont, au départ, prévus dans le couvercle 2a de la cuve du réacteur ou dans son fond 2b. Le dispositif selon l'invention 20 a une longueur suffisante pour que leur partie active soit immédiatement à proximité de la face supérieure ou de la face inférieure du cœur 4 du réacteur. On comprend que par une telle position d'émission de produits de fission, on simule encore mieux vis-à-vis du dispositif de détection 16 une véritable rupture de gaine.

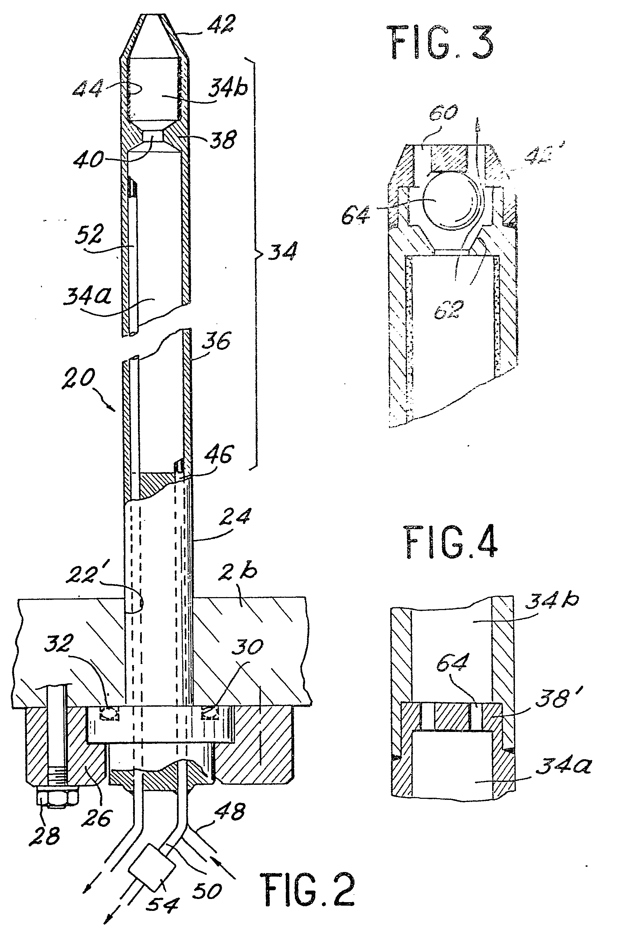

Sur la figure 2, on a représenté un premier mode de réalisation du dispositif d'émission 20. Celui-ci comporte une canne cylindrique 24 qui traverse par exemple le fond 2b de la cuve par un orifice d'instrumentation 22'. Bien entendu, on n'est pas obligé d'utiliser les trous d'instrumentation et l'on peut orienter la canne horizontalement par rapport à l'axe de la cuve.

Cette canne est fixée par exemple par une couronne 26 et des ensembles goujon-écrou 28 sur le fond 2b. En outre, la canne 24 comporte une embase 30 qui est appliquée sur la paroi 2b de façon étanche par l'intermédiaire de joints d'étanchéité 32. Dans le prolongement de la canne 24, on trouve une chambre 34 limitée par une paroi extérieure cylindrique 36. Cette chambre 34 est divisée en une première chambre dite inférieure 34a et une chambre supérieure 34b par une restriction 38 définissant un étranglement 40. Bien entendu, les termes de « supérieur » et d'« inférieur » sont liés au fait que le dispositif est introduit dans le fond de la cuve du réacteur. Il faudrait bien entendu inverser ces termes dans le cas où le dispositif (dispositif 20b) traverse le couvercle du réacteur. La chambre supérieure 34b se termine par une buse conique 42 qui débouche dans la cuve du réacteur lorsque le dispositif est mis en place. On comprend que la restriction 38 et la buse 42 créent des pertes de charge. La définition de ces deux éléments est telle que la perte de charge créée par l'étranglement 38 soit inférieure à celle qui est créée par la buse 42 de la chambre 34b. En outre, la paroi latérale interne de la chambre supérieure 34b est recouverte par un dépôt ou par un placage métallique 44 d'un produit radioactif, donc capable d'émettre des produits de fission. Ce produit peut être par exemple de l'uranium métallique ou de l'oxyde d'uranium.

La canne 24 est traversée par des tubulures qui débouchent dans la chambre inférieure 34a. On trouve tout d'abord une tubulure 46 qui débouche à l'extrémité inférieure de la chambre 34a et qui est raccordée à l'extérieur de la canne 24 à deux conduites 48 et 50 dont les fonctions seront expliquées ultérieurement. Il va de soi que l'on pourrait très bien dédoubler la conduite 46 en deux tubulures séparées. On trouve également une tubulure 52 qui, elle, débouche à la partie supérieure de la chambre 34a. Enfin, un système de contrôle 54 du niveau d'activité du dépôt radioactif 44 est situé autour de la conduite 50.

On va maintenant décrire le fonctionnement du dispositif selon les différentes phases opératoires.

En dehors des périodes d'étalonnage, aucun fluide n'est introduit dans la conduite 46. Les produits de fission émis par le dépôt radioactif 44 dans la chambre 34b traversent l'étranglement 38 et pénètrent dans la chambre 34a du fait de la différence de pertes de charge entre la buse 42 et l'étranglement 38. Ces produits de fission sont évacués dans la chambre inférieure 34a par la tubulure 46 et le tube 50. Il y a donc écoulement de produits de fission vers l'extérieur de la cuve du réacteur. L'écoulement des produits de fission est obtenu par la force motrice due à la pression du fluide dans la cuve du réacteur. Il va sans dire que le tube 50 est dirigé avec toutes les précautions d'usage vers un dispositif de traitement des effluents et que l'étranglement est étudié de telle sorte que le débit soit très très faible. Dans cette position, c'est-à-dire lorsque les produits de fission sont évacués vers l'extérieur de la cuve, le système de contrôle 54 permet de contrôler l'état physique et matériel de la source constituée par le dépôt radioactif 44. Grâce à ce contrôle, il est possible de mettre le dispositif hors d'usage sans arrêter le réacteur, en obturant les tubes 52, 50 et 48 si l'état de la source est défectueux.

Lorsque l'on veut réaliser une émission permanente de produits de fission dans la cuve du réacteur et donc dans l'ensemble du circuit primaire, on injecte dans la tubulure 48, à l'aide d'une pompe, de l'eau sous une pression supérieure à 160 bars, c'est-à-dire à une pression supérieure à celle du fluide caloporteur dans la cuve du réacteur. Cette eau traverse la chambre 34a, l'étranglement 38 ainsi que la chambre 34b entraînant les produits de fission. On a ainsi à la sortie de la buse 42 une émission permanente de produits de fission tant que de l'eau sous pression est appliquée à l'entrée de la tubulure 48. Bien entendu, le temps de balayage de la chambre 34b est très inférieur à la durée de vie moyenne des produits de fission observés par le dispositif de détection. En outre, compte tenu du trajet de l'eau dans les chambres 34a et 34b et compte tenu du matériau constituant la paroi 36 de la chambre et de sa longueur, l'eau qui sort par la buse 42 a une température sensiblement égale à celle du liquide caloporteur dans la cuve du réacteur. On évite ainsi des chocs thermiques. On comprend qu'il est intéressant pour un étalonnage de produire des émissions en créneaux de produits de fission dans la cuve du réacteur. Pour cela, le dispositif selon l'invention, dans son mode de réalisation perfectionné, permet d'assurer un balayage de la chambre 34a pour en enlever la totalité des produits de fission qu'elle pourrait contenir. Dans ce but, on injecte un faible débit d'eau par la tubulure 48, ce débit d'eau balaye la chambre 34a entraînant les produits de fission. L'évacuation est assurée par la tubulure 52 du fait de la perte de charge créée par l'étranglement 38. De plus, un certain débit venant de la cuve pénètre dans la chambre 34b à travers la buse 42 puis pénètre dans la chambre 34a d'où il est évacué par la tubulure 52. Lorsque cette opération de balayage a été effectuée, il suffit d'effectuer les opérations correspondant à une émission permanente.

Sur la figure 3, on a représenté une variante de réalisation de la buse de sortie 42. Selon ce mode de réalisation, la buse référencée 42' comporte plusieurs orifices 60. Elle comporte également une partie tronconique 62 formant le siège d'un clapet constitué par une bille 64. On comprend que lorsqu'aucune pression supérieure à la pression dans la cuve n'est appliquée par la tubulure 48, la bille repose sur son siège 62 et aucun produit de fission ne peut pénétrer dans la cuve du réacteur. Au contraire, lorsque de l'eau sous pression est appliquée dans cette tubulure, la bille se soulève et permet l'émission de produits de fission (position représentée sur la figure 3).

Sur la figure 4, on a représenté une variante de réalisation de l'étranglement 38. Dans ce cas, l'étranglement 38 définit plusieurs orifices calibrés 64 disposés dans une couronne et créant une perte de charge équivalente à celle qui est créée par l'étranglement 38.

On comprend d'après la description qui précède que le dispositif objet de l'invention présente de nombreux avantages par rapport à l'art antérieur. Outre les avantages déjà indiqués précédemment, on comprend que ce dispositif permet une émission de produits de fission contrôlée. Il est donc possible d'admettre une émission instantanée plus importante que dans les systèmes existant précédemment. Cela permet d'obtenir un signal de détection plus important au niveau du dispositif 16. En particulier, le rapport signal/bruit de fond pour ce dispositif est amélioré. En outre, du fait que l'eau sortant par la buse 42 a une température sensiblement égale à celle de l'eau contenue dans la cuve du réacteur, on évite, non seulement les chocs thermiques, mais également des perturbations de l'écoulement du fluide de refroidissement dans la cuve. Enfin, compte tenu de sa structure, le dispositif présente un faible encombrement. Par exemple, le diamètre extérieur du dispositif et de sa canne 24 de supportage peut être de l'ordre de 15 mm. Il est donc facile d'introduire ce dispositif par les trous d'instrumentation 22' et 22 qui sont prévus à la construction dans le fond et dans le couvercle de la cuve du réacteur.

**Revendications**

1. Dispositif étalon d'émission de produits de fission pour étalonner un système de détection de rupture de gaine d'éléments combustibles dans un réacteur nucléaire du type refroidi par de l'eau sous pression, ledit réacteur comprenant une cuve (2) de résistance à la pression et un cœur (4) constitué par les assemblages (6) d'éléments combustibles, ledit dispositif se caractérisant en ce qu'il comprend une canne creuse (24) apte à être introduite dans ladite cuve et définissant une chambre (34) divisée en une première chambre (34a) et une deuxième chambre (34b) située à l'extrémité de la canne par une restriction (38) créant une première perte de charge, ladite deuxième chambre (34b) comportant sur sa paroi un dépôt ou un placage métallique (44) de matériau radioactif et communiquant ou pouvant être mise en communication avec la cuve du réacteur, lorsque ledit dispositif est en position, par une buse (42) créant une deuxième perte de charge supérieure à celle qui est créée par ladite restriction, et au moins une première tubulure (46) disposée dans ladite canne et débouchant à l'extrémité de la première chambre (34a) éloignée de la deuxième chambre (34b), ladite première tubulure (46) étant apte à être reliée à une source d'eau sous pression à une pression supérieure à celle de l'eau de refroidissement dudit réacteur, et apte à recueillir les produits de fission émis par ledit dépôt lorsqu'aucune pression n'est appliquée à l'entrée de ladite tubulure.

2. Dispositif selon la revendication 1, caractérisé en ce qu'il comprend une deuxième tubulure (52) disposée dans ladite canne et débouchant à l'extrémité de ladite première chambre (34a) proche de la deuxième chambre (34b), ladite deuxième tubulure (52) étant apte à recueillir l'eau injectée sous un faible débit dans ladite première tubulure (46) sous l'effet de la perte de charge créée par ladite restriction.

3. Dispositif selon l'une quelconque des revendications 1 et 2, caractérisé en ce que ladite chambre a une longueur suffisante et des parois réalisées avec un matériau suffisamment bon conducteur de la chaleur pour que l'eau injectée dans ladite chambre sortant par ladite buse ait une température sensiblement égale à celle de l'eau dans la cuve du réacteur.

## Claims

1. Apparatus for callibrating the emission of fission products for callibrating a system for detecting rupture of the cladding of fuel elements of a pressurized water-cooled nuclear reactor, said reactor comprising a pressure-resistant vessel (2) and a core (4) comprising assemblies (6) of fuel elements, said apparatus being characterized in that it comprises a hollow rod (24) adapted for introduction into said vessel and defining a chamber (34) divided into a first compartment (34a) and a second compartment (34b) located at the end of the rod by means of a constriction (38) producing a first pressure drop, said second compartment (34b) having on its wall a deposit or metal plating (44) of radioactive material, and communicating or being capable of being put in communication with the reactor vessel, when said apparatus is in position, by a nozzle (42) producing a second pressure drop greater than that produced by said constriction, and at least one first tube (46) disposed in said rod and opening at the end of the first compartment (34a) remote from the second compartment (34b), said first tube (46) being adapted for connection to a source of pressurized water at a pressure greater than that of the reactor cooling water, and adapted to collect fission products emitted by said deposit when no pressure is applied at the input of said tube.

2. Apparatus according to claim 1 characterized in that it comprises a second tube (52) disposed in said rod and opening at the end of said first compartment (34a) nearest the second compartment (34b), said second tube (52) being adapted to collect the water injected at a low rate through said first tube (46) under the effect of the pressure drop produced by the said constriction.

3. Apparatus according to either of claims 1 and 2 characterized in that the said chamber has a sufficient length, and its walls are made from a material having sufficient heat conductivity, for water injected into said chamber leaving through said nozzle to have a temperature substantially equal to that of the water in the reactor vessel.

## Ansprüche

1. Spaltprodukte emittierende Eichvorrichtung zum Eichen einer Einrichtung zum Feststellen von Hüllenschäden in einem druckwassergekühlten Kernreaktor, der einen dem Druck widerstehenden Behälter (2) und einen von einer Anordnung (6) von Brennelementen gebildeten Kern (4) umfaßt, dadurch gekennzeichnet, daß die Vorrichtung ein Rohr (24), welches in den Behälter einführbar ist und eine Kammer (34) begrenzt, welche in eine erste Kammer (34a) und eine zweite, am Ende des Rohres angeordnete Kammer (34b) durch eine Einengung (38) unterteilt ist, die einen ersten Ladungsverlust hervorruft, wobei die zweite Kammer (34b) auf ihrer Wand eine Metallauflage oder Metallbekleidung (44) aus einem radioaktiven Material aufweist und, wenn die Vorrichtung in Position gebracht ist, über eine Düse (42), die einen zweiten Ladungsverlust erzeugt, der größer als der von der ersten Einengung erzeugte ist, mit dem Reaktorbehälter in Verbindung steht oder in Verbindung bringbar ist, und wenigstens eine erste Röhre (46) aufweist, die in dem Rohr angeordnet ist und an dem von der zweiten Kammer (34b) entfernten Ende der ersten Kammer (34a) mündet, wobei die erste Röhre (46) mit einer Druckwasserquelle verbunden werden kann, deren Druck höher als derjenige des Kühlwassers des Reaktors ist, und die von der Auflage emittierten Spaltprodukte sammeln kann, wenn am Eingang der Röhre kein Druck angewendet wird.

2. Vorrichtung nach Anspruch 1, dadurch gekennzeichnet, daß eine zweite Röhre (52) vorgesehen ist, die in dem Rohr angeordnet ist und an dem nahe der zweiten Kammer (34b) liegenden Ende der ersten Kammer (34a) mündet, und daß mit der zweiten Röhre (52) aufgrund der Wirkung des von der Einengung erzeugten Ladungsverlustes Wasser gesammelt werden kann, welches mit geringer Ausströmmenge in die erste Röhre (46) eingebracht worden ist.

3. Vorrichtung nach Anspruch 1 oder 2, dadurch gekennzeichnet, daß die Kammer eine ausreichende Länge und Wänge aufweist, die aus einem ausreichend gut wärmeleitenden Material hergestellt sind, so daß das in die Kammer eingebrachte Wasser durch die Düse mit einer Temperatur ausströmt, die im wesentlichen gleich derjenigen des sich in dem Reaktorbe-hälter befindenden Wassers ist.

FIG.1

FIG. 3

FIG.4

FIG.2